# EUROPEAN PATENT SPECIFICATION

(11) **EP 4 514 735 B1**
(45) Date of publication and mention of the grant of the patent: **22.04.2026**
(21) Application number: 23723881.1
(22) Date of filing: 28.04.2023
(51) Int. Cl.: B66D 1/20, F16H 7/02, F16H 7/08, B66C 13/23, B65G 1/04, B66F 9/06

(54) **A ROBOTIC LOAD-HANDLING DEVICE**
ROBOTER-LASTENHANDHABUNGSVORRICHTUNG
DISPOSITIF DE MANUTENTION ROBOTISÉ DE CHARGES

(30) Priority: 29.04.2022 GB 202206345
(43) Date of publication of application: 05.03.2025
(73) Proprietor: Ocado Innovation Limited, Hatfield, Hertfordshire AL10 9UL (GB)
(72) Inventor: MCMULLEN, Joanna Elizabeth, Hatfield Hertfordshire AL10 9UL (GB)
(74) Representative: Ocado Group IP Department
(86) International application number: PCT/EP2023/061366
(87) International publication number: WO 2023/209213

(56) References cited:
- WO-A1-2021/148657
- CN-A- 108 473 252
- JP-A- 2000 109 285
- JP-A- 2006 111 410

## Description

### Technical Field

The present invention relates to the field of robotic load handling devices for handling storage containers or bins in an automated storage system comprising stacked containers arranged in a grid framework structure, more particularly to a winch assembly of the robotic load handling device.

### Introduction

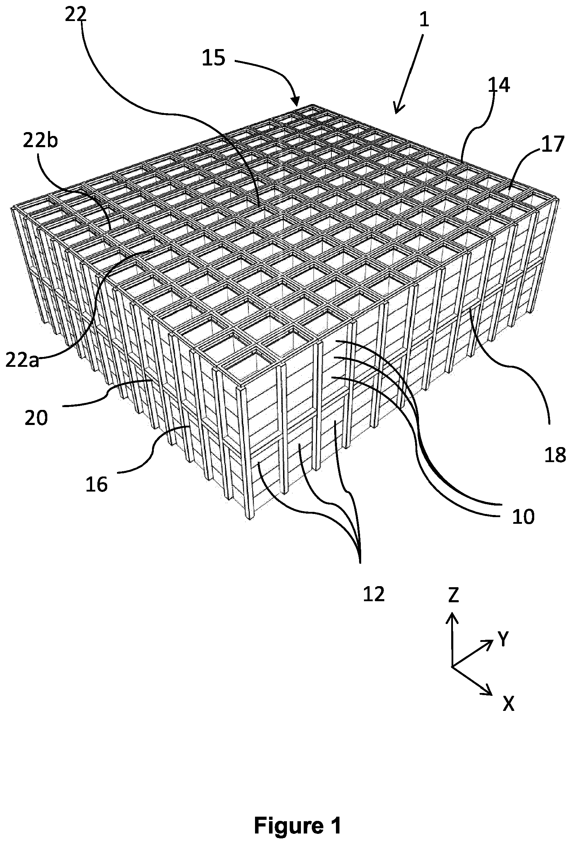

Storage and retrieval systems comprising a three-dimensional storage grid structure, within which storage containers/bins are stacked on top of each other, are well known. PCT Publication No. WO2015/185628A (Ocado) discloses a robotic load-handling device according to the preamble of claim 1 and describes a known storage and fulfilment system in which stacks of bins or containers are arranged within a grid framework structure. The bins or containers are accessed by robotically controlled load handling devices operative on tracks located on the top of the grid framework structure. A system of this type is illustrated schematically in Figures 1 to 3 of the accompanying drawings.

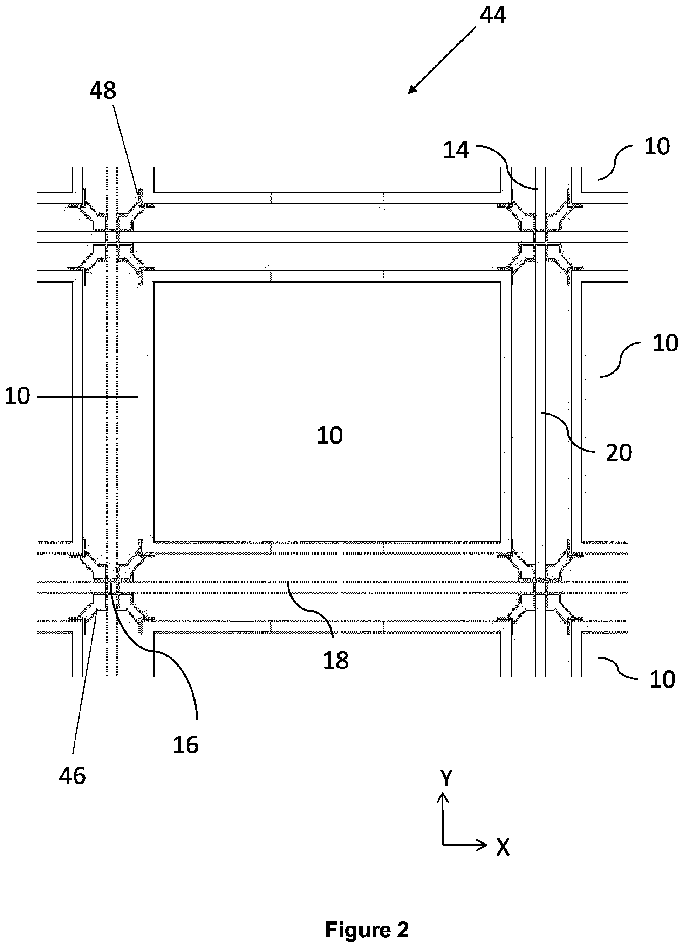

As shown in Figures 1 and 2, stackable containers, known as bins 10, are stacked on top of one another to form stacks 12. For the purpose of definition, the terms "bin", "tote", "container" and "storage container" are used interchangeably in the description to mean the same feature. The stacks 12 are arranged in a grid framework structure 14 in a ware-housing or manufacturing environment. The grid framework structure is made up of a plurality of storage columns or grid columns. Each grid cell in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

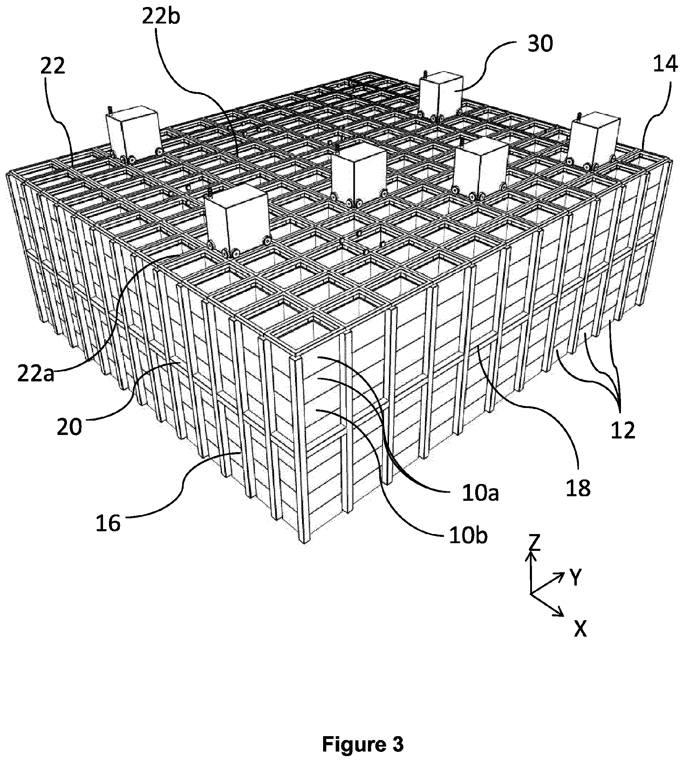

The grid framework structure 14 comprises a plurality of upright members 16 that support horizontal grid members 18, 20. A first set of parallel horizontal grid members 18 is arranged perpendicularly to a second set of parallel horizontal grid members 20 to form a plurality of horizontal grid cells supported by the upright members 16. The members 16, 18, 20 are typically manufactured from metal. The bins 10 are stacked between the members 16, 18, 20 of the grid framework structure 14, so that the grid framework structure 14 guards against horizontal movement of the stacks 12 of bins 10, and guides vertical movement of the bins 10. The top level of the grid framework structure 14 includes rails or tracks 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

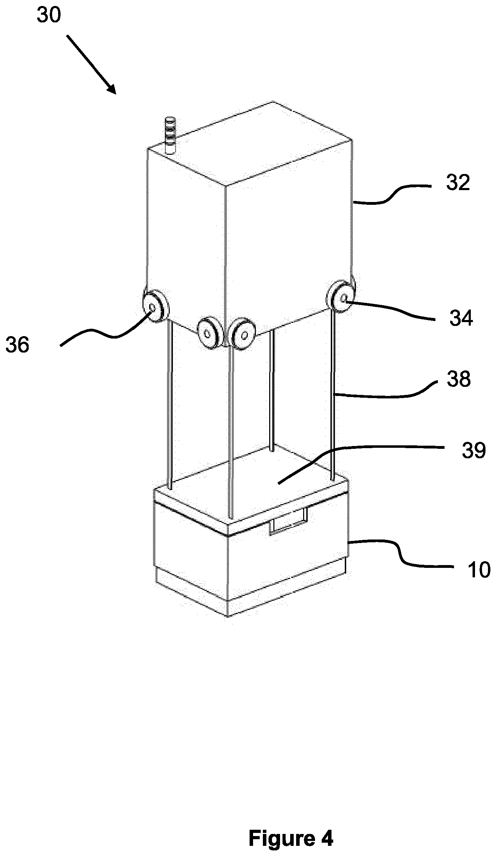

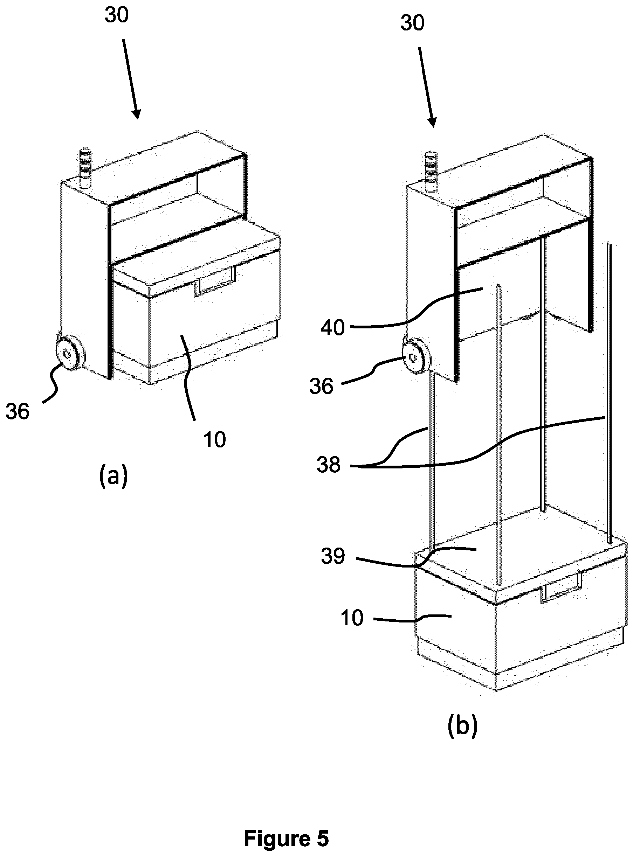

A known load handling device 30 shown in Figure 4 comprises a vehicle body 32 and is described in PCT Patent Publication No. WO2015/019055 (Ocado). Here, the load handling device 30 comprises a wheel assembly comprising a first set of wheels 34 consisting a pair of wheels on the front of the vehicle 32 and a pair of wheels 34 on the back of the vehicle 32 for engaging with the first set of rails or tracks to guide movement of the device in a first direction, and a second set of wheels 36 consisting of a pair of wheels 36 on each side of the vehicle 32 for engaging with the second set of rails or tracks to guide movement of the device in a second direction. The vehicle body of the load handling device comprises an upper portion and a lower portion. The wheels are arranged around the periphery of a cavity or recess, known as a container-receiving recess 40, in the lower portion of the vehicle body. The load handling device 30 as shown in Figure 5 comprises a container-lifting mechanism comprising a lifting drive assembly or winch assembly comprising a winch or a crane mechanism to lift a storage container or bin, also known as a tote, from above and a container gripping assembly or grabber device 39. The lifting mechanism is located in the upper portion of the vehicle body. The grabber device is formed as a frame comprising four corner sections. The winch crane assembly comprises a lifting tether 38 wound on a spool or reel (not shown). Typically, the winch assembly comprises four spools, each spool of the four spools carrying a lifting tether, having one end anchored to the spool and the other end anchored to a corner of the grabber device.

The container gripping assembly 39 is configured to grip the top of the container 10 to lift it from a stack of containers in a storage system of the type taught in PCT Patent Publication No. WO2015/019055 (Ocado). The winch assembly is driven by a drive mechanism (not shown), commonly known as a Z-motor for the reason that the Z-motor is configured to raise and lower the container gripping assembly in the Z direction when lifting and lowering a storage container. During operation of the drive mechanism when lowering the container gripping assembly, the lifting tether is paid out from the spool.

It is essential during a picking operation, that the container gripping assembly remains horizontal at all times, particularly when engaging with a storage container, otherwise there is the potential risk that at least one of the lifting tethers holding the container gripping assembly may tear if subjected to unbalanced and high loads. To possess the necessary physical properties (Young's Modulus) to bear the load of the storage container, which can be as heavy as 35kg, the lifting tethers are generally in the form of a tape or band, usually made of metal (commonly a steel alloy). Typically, the container gripping assembly is configured as a frame and four lifting tapes wound on separate spools are used to suspend the frame from the body of the load handling device. Traditionally, the lifting tethers spooled onto separate spools are arranged within an upper level of the housing or body of the load handling device. Separate motors are used to drive each of the four spools so as to lift and lower the container gripper assembly. Due to increased weight and complexity of having separate motors to drive the four spools, recent development has moved towards the use of a single motor and the use of a pulley system to raise and lower the container gripper assembly. WO2021/148657 (Ocado Innovation Limited) describes a lifting drive assembly comprising a single motor and a plurality of timing pulleys, timing belts and/or gears that are configured to transfer rotation from an output of the single motors to raise and lower the container-gripping assembly. The timing pulleys and their respective timing belts engage via teeth and corresponding grooves or recesses. In one particular embodiment of WO2021/148657 (Ocado Innovation Limited), a single timing belt to connect the single motor to the plurality of timing pulleys is described.

To ensure that the container gripping assembly remains horizontal, is it is important that the length of all of the tapes is kept the same at all times during operation of the container gripping assembly. To ensure that the lengths of all of the tethers anchored to the container gripper assembly are equal such that the container gripping assembly is kept horizontal during operation, the length of each of the tapes must be adjusted, both initially, and at various service intervals. Adjustment is required since the tapes tend to elongate or stretch over time, which can be attributed to numerous factors such as environmental, motor wear, stretching of the tape and so on. In an extreme case where the length of any one of the tapes is not equal, the container gripping assembly may fail to engage with the container either because its descent falls too short or overshoots the container.

The lifting drive assembly itself can also be responsible for affecting the orientation of the container gripping assembly when being raised and lowered. As four lifting tethers are anchored to the container gripper assembly, if any one of the timing pulleys connecting the single motor to the container gripper assembly slips or skips a tooth from one of their respective pulleys, this can cause any one of the spools carrying the lifting tethers to be out of kilter with the other spools, i.e. to lag behind. This in turn can cause any one of the lifting tethers to be wound out less than the other spools. The problem is exacerbated where a single belt is used to connect the single motor to a plurality of timing pulleys used to drive multiple spools as described in WO2021/148657 (Ocado Innovation Limited). The tension applied to the timing belt from the single motor can cause the belt to stretch resulting in a section of the timing belt to become slack, raising the risk that the timing belt can disengage from the timing pulley. The problem of the timing belt stretching is particularly exacerbated when the lifting mechanism is picking up a fully loaded storage container, which can weigh as much as 35kg, since the high torque of the single motor when picking up a fully loaded storage container is transferred to the timing pulleys via the timing belt. Since the plurality of spools are driven by the plurality of timing pulleys, the slipping or disengagement of the timing belt connecting one or more of the timing pulleys can cause one or more lifting tethers to be wound differently on their respective spools, which in tum can result in the container gripper assembly anchored to the lifting tethers becoming uneven. The unevenness of the container gripper assembly when engaged with the storage container may result in the storage container fouling against the vertical uprights of the grid framework structure and in a worst case scenario, the storage container may become jammed between the vertical uprights. Even with the provision of belt tensioners to ensure that the tension in the timing belt is maintained during operation of the single motor, the use of belt tensioners only maintains the tension in the timing belt over a fixed predetermined range of tensions dictated by the tension of the belt tensioner. When the tension in the timing belt exceeds the tension provided by the belt tensioner, the problem of the belt stretching still exists.

To correct for the unevenness of the container gripper assembly, it may be necessary to remove any slack in the reel, by disconnecting the spool or reel from its rotational shaft and adjusting the tape by free rotation of the reel or spool relative to the rotational shaft. The reel or spool is subsequently mounted to the rotational shaft when the band has the desired length. A variant to this method is to provide adjustable lifting band connectors fixed to the container gripping assembly as taught in WO 2019/206438 (Autostore Technology). Each adjustable lifting connector comprises a bracket and a band connector hub. The bracket is connected to the container gripping assembly and the band connector hub is connected to the bracket and one of the lifting bands, such that movement of the band connector hub relative to the bracket will adjust the vertical distance between a respective corner section of the container gripping assembly and the lifting band drive assembly.

It is, therefore, a primary object of the present invention to provide a lifting drive mechanism, based on a single motor to raise and lower the container gripper assembly that does not suffer from the above problems.

### Summary of the Invention

The present invention has mitigated the above problem by controlling the length of a section or segment of the timing belt that is under tension when connected to the single motor of the storage bin lifting drive assembly. Applying the principles of Hooke's law, the greater the length of the timing belt that is under tension, the greater the proportion of the timing belt is stretched, and the greater the consequential slack of the timing belt which increases the risk of the timing belt slipping on the timing pulley. Thus, the shorter the length of the timing belt that is under tension, the smaller the proportion of the timing belt put under strain, thus reducing the risk of the timing belt slipping on the timing pulley. Since the torque of the motor is transferred to the timing belt when picking up a storage container, which can weigh up to 35kg, slipping of the timing belt is more problematic when raising the container gripper assembly than when lowering the container gripper assembly, which is largely influenced by gravitational forces.

To allow the timing belt to pass over at least three timing pulleys with a large enough wrap angle to avoid slipping of the timing belt, a belt tensioner wheel or guide wheel is present which presses against the back of the timing belt, forcing the timing belt into a serpentine shape against the timing pulley. The belt tensioner wheel is configured to urge the timing belt against the timing pulley in the sense of applying a force in a direction perpendicular to the tangential force of the timing belt against the timing pulley. The amount of tension applied to different sections or segments of the timing belt can be controlled by controlling the position of the belt tensioner wheel or guide wheel with respect to the timing pulley in a pulley system. The tension is dependent on rotational direction of the timing pulley to raise or lower the container gripper assembly. The shorter the length of the timing belt between the belt tensioner wheel and the single motor that is under tension, the lower the risk of the timing belt slipping since less of the timing belt is stretched during operation of the single motor. As the tension in the timing belt is greatest when the single motor pulls the timing belt towards the single motor, which is when the single motor is configured to raise the container gripper assembly, the belt tensioner wheel is positioned such that the tension in the timing belt is concentrated in the region of the timing belt between the belt tensioner wheel and the single motor that is moving in a direction towards the single motor. Since the belt tensioner wheel is configured to urge the timing belt against the timing pulley, the tension in the timing belt is highest between the timing pulley nearest the single motor and the motor that is moving in a direction towards the single motor. As this is a small section of the timing belt, any stretching in this section of the timing belt is minimal. The present invention provides a robotic load-handling device for lifting and moving containers stacked in stacks in a grid framework structure, the grid framework structure including, above the stacks of containers, a first set of tracks extending in a first direction and a second set of tracks extending in a second direction which is transverse to the first direction, the load-handling device being configured to move on the tracks above the stacks, the load-handling device comprising:
a wheel assembly comprising a first set of wheels for engaging with the first set of tracks to guide movement of the load-handling device in the first direction and a second set of wheels for engaging with the second set of tracks to guide movement of the load-handling device in the second direction;
a wheel-positioning mechanism for selectively engaging either the first set of wheels with the first set of tracks or the second set of wheels with the second set of tracks, the wheel-positioning mechanism being configured to raise or lower the first set of wheels or the second set of wheels relative to the body, thereby enabling the load-handling device to selectively move in either the first direction or the second direction across the tracks of the grid framework structure; and
a container-lifting mechanism comprising a container-gripping assembly configured to releasably grip a storage container and a lifting drive assembly configured to raise and lower the container-gripping assembly,

wherein the lifting drive assembly comprises a single motor configured to raise the container-gripping assembly in a first rotational direction and lower the container-gripping assembly (43) in a second rotational direction;
a first set of spools and a second set second of spools, each spool of the first and second sets of spools carrying a lifting tether having a first end anchored to the container gripper assembly and a second end anchored to its respective spool;
a drive pulley connected for rotation with the single motor,
a plurality of timing pulleys connected for rotation with the first and second set of spools and the drive pulley such that the single motor is configured to rotate the first and second set of spools to raise and lower the container-gripping assembly;
wherein the plurality of timing pulleys comprises a first timing pulley and a second timing pulley, the first and second timing pulleys are connected for rotation to the drive pulley by a single timing belt forming a closed loop around the first and second timing pulleys and the drive pulley such that the drive pulley drives rotation of the first and second timing pulleys in the same rotational direction; and
wherein the first timing pulley is disposed between the drive pulley and the second timing pulley and wherein the lifting drive assembly further comprises a belt tensioning wheel arranged between the first timing pulley and the second timing pulley, the belt tensioning wheel being arranged to urge the single timing belt against the first timing pulley such that the tension in a first section of the single timing belt between the first timing pulley and the drive pulley, moving in a direction towards the single motor, in use, is greater than the tension in a second section of the single timing belt between the first timing pulley and the second timing pulley when the single motor rotates in the first rotational direction.

The first and second timing pulleys are in contact with an inner surface of the timing belt such that the first and second timing pulleys, and thus their respective spools, are driven in the same rotational direction. Optionally, the belt tensioner wheel allows the timing belt to pass over the first and second timing pulleys and the drive pulley in a serpentine shape and therefore allows a greater wrap angle of the timing belt around the first timing pulley. Thus, the timing belt in the region where the belt tensioner wheel urges the single timing belt against the first timing pulley can be defined as a serpentine region of the single timing belt. The term "single timing belt" and "timing belt" are used interchangeably in the specification to mean the same feature. The term timing belt can encompass a rubber belt or chain. Preferably, the length of the first section of the single timing belt is smaller than the second section of the belt. The second section of the single timing belt can be any section of the single belt from the first timing pulley to the drive pulley via the second timing pulley, i.e. from the first timing pulley around the second timing pulley and then to the drive pulley. This includes a segment of the single timing belt between the first timing pulley and the second timing.

The shorter length of the first section of the timing belt reduces the amount of the timing belt that is under tension, and thus reduces the proportion of the timing belt that is stretched. There are various arrangements for the belt tensioning wheel to control tension in the timing belt, which are largely dependent on the rotational direction of the spools when raising the container gripper assembly since the tension is greatest in the segment of the timing belt that is drawn towards the drive pulley (drive pulley is connected for rotation to the single motor). In one example, the belt tensioning wheel is arranged to urge the single timing belt against the underside of the first timing pulley when the first rotational direction is in an anti-clockwise direction and the second rotational direction is in a clockwise direction such that the first section of the single timing belt (lower portion of the single timing belt) adopts a serpentine shape. In another example, the belt tensioning wheel is arranged to urge the single timing belt against the upper side of the first timing pulley when the first rotational direction is in a clockwise direction and the second rotational direction is in an anti-clockwise direction such that the first section of the single timing belt (upper portion of the single timing belt) adopts a serpentine shape.

There are different arrangements for connecting the plurality of timing pulleys to the single motor for driving rotation of the first and second set of spools. Optionally, the first timing pulley and the first set of spools are mounted for rotation on a lifting shaft such that the lifting shaft is common to the first set of spools and the first timing pulley. Optionally, at least one of the second set of spools is driven by the single motor by being connected to the lifting shaft by a second timing belt. In this example, the second set of the spools are each mounted for rotation on separate shafts and are driven to rotate by being connected to the single motor by both the timing belt and the second timing belt. In this arrangement, preferably, the lifting drive assembly further comprises a third timing pulley mounted for rotation on the lifting shaft and a fourth timing pulley connected for rotation to the at least one of the second set of spools, the second timing belt forming a closed loop around the third timing pulley and fourth timing pulley such that lifting shaft drives rotation of the at least one of the second set of spools. To maintain the tension in the second timing belt, preferably, the lifting drive assembly further comprises a second belt tensioner wheel being arranged to urge the second timing belt against the third timing pulley. Preferably, the second belt tensioner wheel allows an increased wrap angle of the second timing belt around the third timing pulley and therefore, the second timing belt adopts a serpentine shape around third and fourth timing pulleys.

In another example for driving the rotation of the first and second set of spools by the single motor, the first and second set of spools are respectively mounted on separate lifting shafts that are connected to the single motor by the single timing belt. Preferably, the lifting drive assembly further comprises a second lifting shaft, the lifting shaft defining a first lifting shaft, the second lifting shaft being substantially parallel to the first lifting shaft, and wherein the second set of spools and second timing pulley are mounted for rotation on the second lifting shaft, and wherein the second lifting shaft is rotated by the single motor by being connected to the first lifting shaft by the single timing belt.

To control the wrap angle of the timing belt on the first timing pulley, preferably, the belt tensioner wheel is adjustable so as to adjust the force of the single timing belt against the first timing pulley, and thereby control the wrap angle of the timing belt around the first timing pulley.

Optionally, the container lifting mechanism comprises a communications spool carrying a communication cable for sending and/or receiving communication signals to and from the container gripper assembly, the communication cable having a first end connected to the communication spool and a second end connected to the container-gripper assembly, the communication spool being mounted for rotation on the lifting shaft such that single motor is configured to raise and lower the second end of the communication cable with the container gripper assembly.

Optionally, the robotic load handling device comprises a vehicle body having an upper portion and a lower portion, the upper portion being configured to house one or more operation components, the lower portion being arranged beneath the upper portion, the lower portion comprising a container-receiving space for accommodating at least part of a container.

With the length of each of the lifting tethers extending between the container gripping assembly and their respective spools being substantially equal, to ensure that the orientation of the container gripper assembly is substantially horizontal when raising and lowering the container gripper assembly, preferably, the single motor drives the first set of spools and the second set of spools in synchronization.

The present invention further provides a storage system comprising:
a track system comprising a first set of parallel tracks and a second set of parallel tracks, the first set of parallel tracks extend in a first direction and the second set of tracks extend in a second direction, the first direction being substantially perpendicular to the second direction so as to be arranged in a grid pattern comprising a plurality of grid spaces or grid cells;
a plurality of stacks of containers located beneath the track system, wherein each of the stacks of containers occupies a single grid space or grid cell,
a load handling device according to the present invention arranged to traverse along the track system over the plurality of grid spaces or grid cells such that when positioned above a stack of containers occupying a grid space or grid cell, the container-lifting mechanism is configured to lift at least one container from said stack of containers.

### Brief Description of Drawings

Further features and aspects of the present invention will be apparent from the following detailed description of an illustrative embodiment made with reference to the drawings, in which:
Figure 1 is a schematic diagram of a grid framework structure according to a known system,
Figure 2 is a schematic diagram of a top down view showing a stack of bins arranged within the framework structure of Figure 1.
Figure 3 is a schematic diagram of a known storage system showing a load handling device operative on the grid framework structure.
Figure 4 is a schematic perspective view of the load handling device showing the lifting device gripping a container from above.
Figure 5(a) and 5(b) are schematic perspective cut away views of the load handling device of Figure 4 showing (a) the container receiving space of the load handling device, and (b) a container accommodated within a container receiving space of the load handling device.
Figure 6 is a perspective view of an example of a known container-lifting mechanism.
Figure 7 is a perspective side view of a known container gripping assembly.
Figure 8 is a perspective bottom view of a known container-gripping assembly.
Figure 9(a and b) is a perspective view of another example of a known lifting drive assembly for a container gripper assembly from (a) a top view; and (b) a side view.
Figure 10(a and b) is a perspective view of a lifting drive assembly for a container gripping assembly from (a) top view; and (b) side view according to one embodiment of the present invention.
Figure 11(a and b) is a perspective view of a lifting drive assembly for a container gripping assembly from (a) top view; and (b) side view according to another embodiment of the present invention

### Detailed Description

It is against the known features of the storage system such as the grid framework structure and the load handling device described above with reference to Figures 1 to 5, the present invention has been devised.

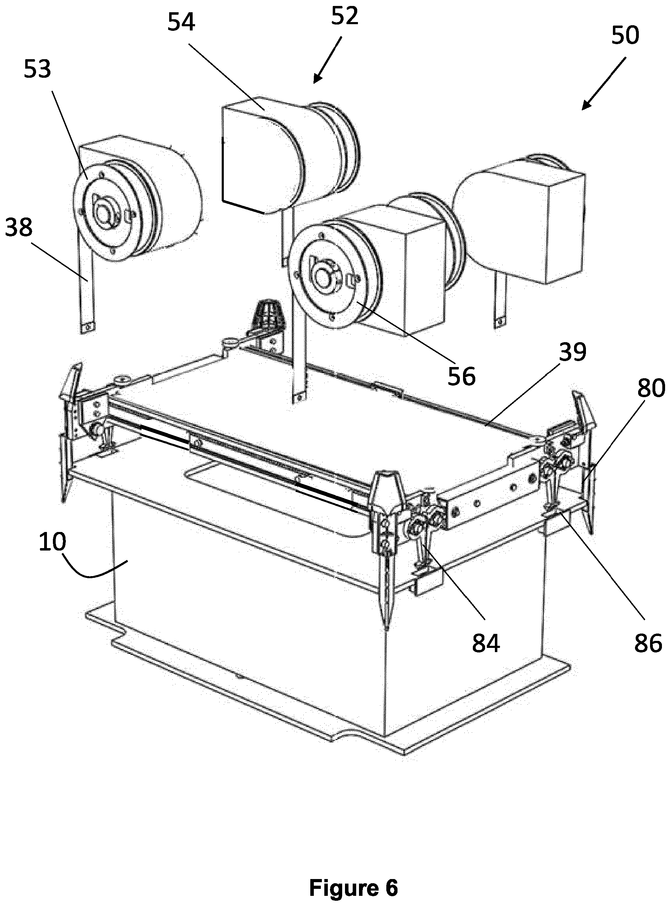

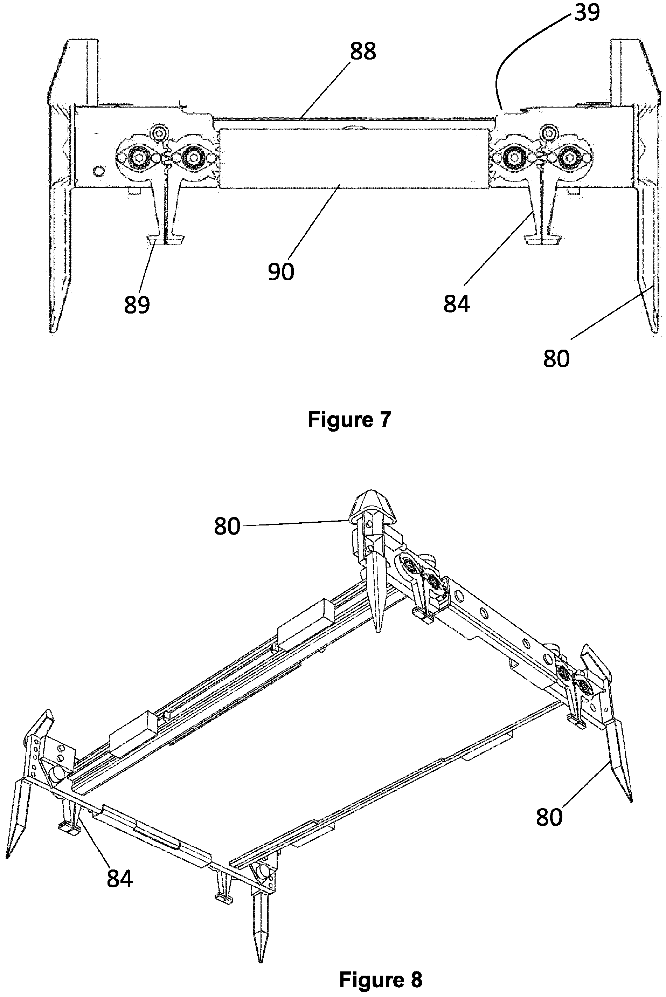

Figure 6 shows a container lifting mechanism 50 known in the art comprising a container gripping assembly 39, otherwise known as a grabber device, for releasably connecting to a storage container 10 below and a lifting drive assembly 52 to raise and lower the grabber device 39. For the avoidance of doubt, the terms "lifting drive assembly" and "container lifting assembly" are used interchangeably in the patent specification to mean the same feature. To raise and lower the container gripping assembly 39, the lifting drive assembly known in the art comprises a set of lifting tapes or bands 38 extending in a vertical direction between the container gripping assembly 39 and the lifting drive assembly 52. For maximum stability and load capacity, commonly four lifting tapes 38 wound on separate spools 53 are shown extending between the lifting drive assembly 52 and at each corner of the grabber device 39. In an exemplary embodiment of the present invention, the container gripping assembly 39 is formed as a frame having four corner sections, a top side 88 and a bottom side 90 (see Figure 7). To grab a container 10, the grabber device 39 comprises four locating pins or guide pins 80 nearby or at each corner of the grabber device 39 which mate with corresponding cut outs or holes (not shown) formed at four corners of the container 10. Four gripper elements 84 arranged at the bottom side of the grabber device 39 to engage with the rim of the container (see Figure 7 and 8). The locating pins 80 help to properly align the gripper elements 84 with corresponding holes or openings in the rim of the container 10.

In the particular embodiment shown in Figure 7, each of the gripper elements 84 comprises a pair of wings that are collapsible so as to be receivable in corresponding holes or openings 86 in the rim of the container (see Figure 6) and an open or enlarged configuration having a size greater than the holes 86 in the rim of the container in at least one dimension so as to lock onto the container (see Figure 6). The wings are actuated into the open and closed configuration by a suitable actuating mechanism coupled to a drive gear, but other actuating mechanisms for actuating the gripper elements known in the art are applicable in the present invention. In the specific example shown in Figure 7, the head of at least one of the wings comprises a plurality of teeth that mesh with the drive gear such that when the gripper elements 84 are actuated by the actuating mechanism, rotation of the drive gear causes the pair of wings to rotate from a closed or collapsed configuration to an open enlarged configuration (Figure 7 and 8). When in the collapsed or closed configuration, the gripper elements 84 are sized to be receivable in corresponding holes 86 in the rim of the container as shown in Figure 6. The foot of each of the pair of wings comprises a stop 89, e.g. a boss, such that when received in a corresponding hole 86 in the rim of the container, the stop 89 engages with an underside of the rim when in an enlarged open configuration to lock onto the container when the grabber device 39 is winched upwards towards the container-receiving portion of the load handling device.

Also shown in Figure 6 is that the four lifting tapes 38 are wound onto separate spools or reels 53 and are driven for rotational movement by a lifting drive mechanism or drive assembly 52 comprising separate drive motors 54 to raise and lower the grabber device 39. The lifting tapes 38 are wound on their respective spool 53 in multiple layers. To ensure that the lifting tape 38 overlays or wraps upon itself when being wound on the spool 53, opposing ends of the spool 53 comprise flanges 56 to constrain the lifting tape 38 onto the spool 53. The width of the spool between the flanges is approximately the width of the lifting tape.

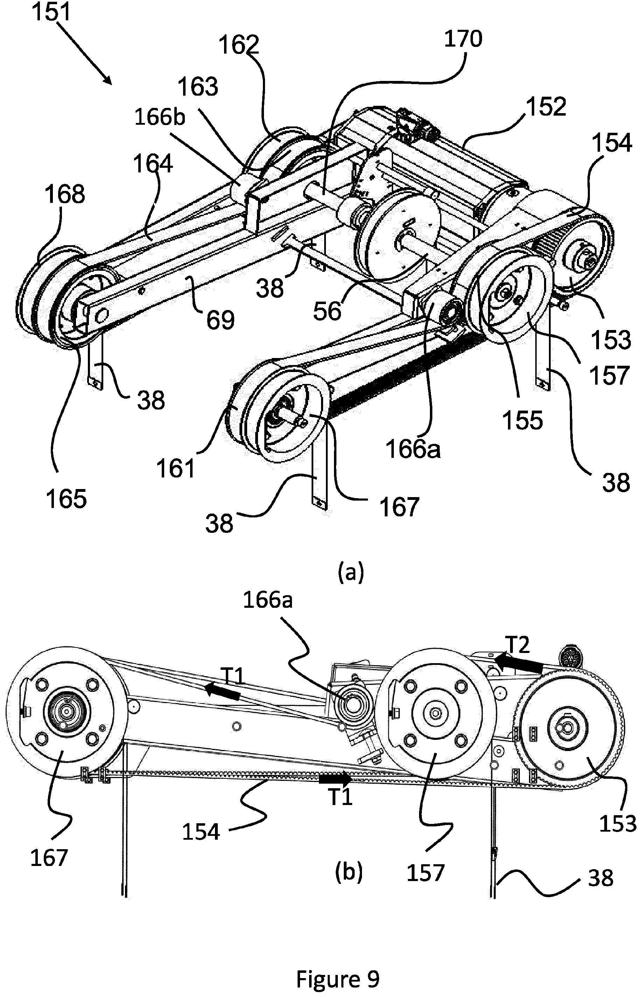

The drive motors 54 are typically brushless DC electric motors. The separate drive motors 54 are driven in synchronisation to provide synchronised rotational movement of all of the spools 52. This helps to keep the container gripper assembly 39 horizontal during operation so as to allow the container gripper assembly, in particular the gripper elements 84 to properly engage with the storage container 10. To reduce the costs of the need to have separate drive motors to drive rotation of the spools, recently in the art a single motor is used to drive rotation of the separate spools to raise and lower the container gripper assembly based on having a pulley system connected to the single motor by one or more timing belts as described in WO2021/148657 (Ocado Innovation Limited) and shown in Figure 9(a and b).

In the illustrated embodiment of the container lifting mechanism 151 described in WO2021/148657 (Ocado Innovation Limited) and shown in Figure 9(a and b), the lifting drive assembly 151 comprises a single motor 152, a drive pulley 153 mounted on a drive shaft of the single motor 152, a first timing pulley 155 and a second timing pulley 161. The first timing pulley 155 is positioned being between the drive pulley 153 and the second timing pulley 161. The drive pulley 153 is connected to the first 155 and second 161 timing pulleys by a single timing belt 154 extending around the drive pulley 153 and the first 155 and second 161 timing pulleys such that the upper portion of the single timing belt 154 adopts a serpentine shape. In the particular embodiment of the present invention, the single timing belt 154 comprises a plurality of teeth that engages with corresponding teeth on the first 155 and second 161 timing pulleys. Thus, rotation of the drive pulley 153 by the single motor 152 causes corresponding rotation of the first 155 and second 161 timing pulleys. As the first 155 and second 161 timing pulleys are in contact with the inner surface of the single belt 154, the first 155 and second 161 timing pulleys each rotate in the same direction. The plurality of spools 157, 162, 167, 168 carrying the lifting tethers comprises a first set of spools 157, 162 comprising a first spool 157 and a second spool 162 and a second set of spools 167, 168 comprising a third spool 167 and a fourth spool 168. The lifting tethers 38 wound on the first set of spools are anchored to one side of the container gripping assembly 39 and the lifting tethers 38 wound on the second set of spools 167, 168 are anchored to the other side of the container gripping assembly 39. In the embodiment shown in Figure 9a, the first set of spools 157, 162 are mounted on the lifting shaft 170 common to the first timing pulley 155 such that the first set of spools 157, 162, rotate with the first timing pulley 155. In comparison to the first set of spools 157, 162, the second set of spools 167, 168 are each mounted on separate shafts. The second timing pulley 161 is mounted on the same shaft as the third spool 167 such that the third spool 167 is connected for rotation with the second timing pulley 161 by the single timing belt 154. In order to drive rotation of the fourth spool 168 of the second set of spools, a third timing pulley 163 is mounted for rotation on the lifting shaft 170 carrying the first set of spools 157, 162 and the fourth spool 168 is connected for rotation with the single shaft 170 by a second timing belt 164 around the third timing pulley 163 and a fourth timing pulley 165. The fourth timing pulley 165 is connected for rotation with the fourth spool 168. Thus, rotation of the drive pulley 153 by the single motor 152 drives rotation of the first 157, 162 and second 167, 168 sets of spools in synchronisation to raise and lower the container gripping assembly 39. The first and second timing pulleys 155, 161 are arranged in contact with the inner surface of the timing belt 154 such that the plurality of timing pulleys (first and second) 155, 161 rotate in the same rotational direction as the drive pulley 154. In the embodiment shown in Figure 9a, an anti-clockwise rotation of the first 157, 162 and second 167, 168 sets of spools raises the container gripping assembly and a clockwise rotation of the drive pulley 153 lowers the container gripping assembly. The first 157, 162 and second 167, 168 sets of spools are connected to their respective timing pulleys, namely, first 155, second 163, third 161 and fourth 165 timing pulleys, such that the timing belts cause the timing pulleys and the first and second sets of spools to rotate in synchronisation. In the embodiment shown in Figure 9a, the spools are connected for rotation with their respective timing pulleys by one or more bolts.

The single timing belt 154 around the drive pulley 153, the first 155 and second 161 timing pulleys is tensioned by a belt tensioner wheel 166a that is configured to urge the timing belt 154 against the first timing pulley 155. The belt tensioner wheel 166a presses against the outer surface of the timing belt 154 so that a section of the timing belt is formed into a serpentine shape. This increases the wrap angle of the timing belt 154 against the first timing pulley 155 and thereby reduces the risk of the timing belt slipping on the first timing pulley 155. A similar belt tensioning wheel 166b for a similar purpose is provided for urging the second timing belt 164 against the third timing pulley 163, and thus increasing the wrap angle on the third timing pulley 163.

Whilst the use of a belt tensioner wheel 166a, 166b increases the wrap angle of the timing belt against the timing pulley, the arrangement of the plurality of timing pulleys connected by a single timing belt still suffers from the belt slipping on one or more of the timing pulleys. In the particular embodiment of the present invention, slipping of the belt on one or more of the timing pulleys involves the slipping of one or more teeth of the belt on the one or more of the timing pulleys. One hypothesis of the reason for the timing belt slipping on the timing pulley even with the use of a belt tensioner wheel 166a, 166b to increase the wrap angle of the timing belt against the timing pulley, is related to the amount of the timing belt 154, 164 that is under an applied tension when the torque of the single motor which can be as much as 120 Nm is transferred to the single belt 154. Applying the principles of Hooke's law, the timing belt is under strain (strain = extension/length) when under an applied tension. The greater the applied tension, the greater the stretching of the timing belt and thus, strain on the timing belt. Considering that the applied tension is greatest when lifting a fully loaded storage container, which can weigh as much as 35kg, the strain on the timing belt is greatest when raising the container gripper assembly rather than lowering the storage container, which is largely tensioned under the forces of gravity. According to the present invention, controlling the amount of the timing belt that is under an applied tension when raising the container gripper assembly and redistributing the applied tension to a smaller section of the timing belt would reduce the amount of strain, and thus belt stretching, experienced by the timing belt.

In accordance with the present invention, the amount of the timing belt that is under an applied tension can be controlled by the position of the belt tensioner wheel in the pulley system. Taking the example of the arrangement of the single belt and the belt tensioner wheel 166a shown in Figure 9b of WO2021/148657 (Ocado Innovation Limited), the belt tensioner wheel 166a is positioned to urge the timing belt 154 against the upper side of the first timing pulley such that a section of the timing belt adopts a serpentine shape at the upper side of the first timing pulley 155. Since the direction of rotation of the spools is in an anti-clockwise direction when raising the container gripper assembly, the load path T1 from the single motor to the first pulley is via the second pulley 161 as shown by the arrows in Figure 9b. The arrows in Figure 9b show the direction of the load path T1 as the single motor 152 tries to pull a longer section of the timing belt 154 towards the drive pulley 153 from the first timing pulley 155 via the second timing pulley 161 in an endless loop when raising the container gripper assembly. Due to the position of the wheel tensioner wheel 166a urging the timing belt 154 against the upper side of the first pulley 155, the tension in a second section (denoted by reference T2 in Figure 9b) of the timing belt 154 between the drive pulley 153 and the first pulley 155 and which is moving away from the drive pulley 153, is smaller than the tension in the section T1 of the timing belt from the first timing pulley 155 towards the drive pulley 153 via the second timing pulley 161. For ease of explanation, the section of the timing belt that is under the greatest tension when raising the container gripper assembly is the first section of the timing belt, and the timing belt between the first timing pulley and the second timing pulley is the second section. Since the section of the timing belt under the greatest tension when raising the container gripper assembly 39 is the distance between the drive pulley 153 to the first pulley 155 via the second pulley 161, this section is considered the first section of the timing belt 154 denoted by T1 in Figure 9b. The second section of the timing belt, which is much smaller than the first section, is between the drive pulley 153 and the first pulley 155 denoted by the arrow T2 in Figure 9b. Note that the timing belt is moving towards the drive pulley 153 in the first section of the timing belt and away from the drive pulley 153 in the second section of the timing belt.

As a result, a greater length of the timing belt is under an applied tension which would result in the first section of the timing belt extending from the first pulley 155 to the drive pulley 153 via the second pulley 161 to be put under an increased strain. Depending on the material properties of the timing belt, which can be rubber or chain, the increased strain in the first section of the timing belt as a result of the timing belt stretching would introduce some slack in the timing belt, particularly when the container gripping assembly is being raised upwards. The amount of slack in the timing belt determines the level of slip of the timing belt on one or more of the timing pulleys, particularly the first timing pulley 155, i.e. the timing belt misses one or more teeth on the first timing pullet 155. As more of the timing belt 154 stretches, the level of slack in the timing belt increases. The slip in the timing belt 154 on the first timing pulley 155 causes rotation of the first set of spools 157, 162 mounted on the shaft 170 carrying the first pulley 155 to be out of kilter with the second set of spools 167, 168 with the consequential effect of the container gripping assembly anchored to the lifting tethers becoming uneven, since there is a period in the rotation of the plurality of timing pulleys where the timing pulleys do not rotate in synchronisation.

An obvious solution would be to provide a much stronger timing belt to reduce the amount of strain on the timing belt when under an applied tension when the single motor applies a torque in one rotational direction, which can be as high as 120Nm. However, such a solution would be expensive and may require a thicker timing belt, which would be impractical considering the limited available space in the container-lifting mechanism. Even with the incorporation of a motor brake slip in the single motor that allows the shaft 170 of the single motor to slip when the torque on the single motor exceeds a predetermined level, the strain in the timing belt usually exceeds the predetermined level prior to the motor brake slip taking effect, causing belt slippage. For example, a torque of 62Nm may be required to raise the container gripping assembly, and the motor brake slip takes effect when the torque on the single motor exceeds 120Nm. With the arrangement shown in Figure 9(a and b), the timing belt slips when the torque on the single motor in raising the container gripping assembly reaches 62Nm, rather than motor brake slip taking effect. Ideally, the lifting drive assembly should be configured such that the motor brake slip takes effect before any slippage of the timing belt on the timing pulley.

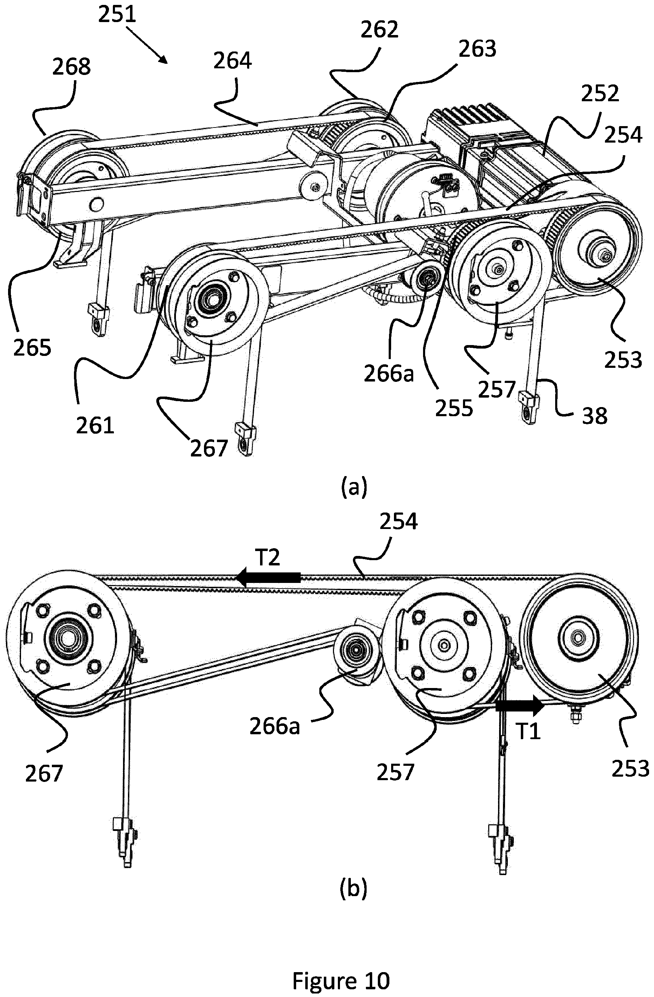

In accordance with an embodiment of the present invention, the position of the belt tensioner wheel 266a can be used to redistribute the tension to a smaller section of the timing belt. According to the present invention, the load path from the first timing pulley 255 towards the drive pulley 253 is minimised when raising the container gripper assembly, and thereby the strain on the timing belt 254 is reduced. Based on the same rotational direction of the first and second set of spools for lifting the container gripping assembly shown in Figure 9(a and b), i.e. anti-clockwise direction, in an embodiment of the container lifting mechanism 251 according to the present invention as shown in Figure 10(a and b), the belt tensioner wheel 266a is relocated to urge the timing belt 254 against the lower side of the first pulley 255 such that the timing belt 254 adopts a serpentine shape at the lower side of the first pulley 255. As a result, the load path from the first pulley 255 towards the drive pulley 253 or single motor 252, denoted by T1 in Figure 10b, is minimised as the length of a section of the timing belt from the first pulley 255 towards the drive pulley 253 (now defined as the first section, T1) is much smaller than the length of a section of the timing belt 254 from the drive pulley 253 towards the first pulley 255 via the second pulley 261 (now defined as the second section, T2). Due to a smaller section of the timing belt being under an increased tension compared to the remainder of the timing belt 254, the degree of strain applied to this first section of the timing belt is minimised so that any stretching of the timing belt when raising the container gripper assembly is minimised, reducing the slack in the timing belt and thus slippage of the timing belt on the first 255 or second 261 timing pulleys. The lower tension in the timing belt happens when the timing belt exits the drive pulley 253 towards the first timing pulley 255 via the second timing pulley 261 (see load path T2 in Figure 10b). Since there is a smaller wrap angle of the timing belt 254 around the first pulley 255 than the second pulley 261, any slippage of the timing belt as a result of slipping of one or more teeth on the first pulley would likely occur on the first pulley 255. In the particular embodiment of the present invention shown in Figure 10(a and b), when the rotational direction of the first 255 and second 261 timing pulleys to raise the container gripper assembly is in an anti-clockwise direction, the applied tension in the first section T1 of the timing belt between the drive pulley 253 and the first timing pulley 255 is greater than the applied tension in any segment of the second section T2 of the timing belt 254 between the first timing pulley 255 and the drive pulley 253 via the second timing pulley 261. Since the length of the first section T1 of the timing belt 254 is smaller than the length of the second section T2 of the timing belt, according to Hooke's law, the level of stretching of the first section T1 of the timing belt would be smaller than if the second section T2 of the timing belt was under increased tension as shown in Figures 9(a and b). Applying an increased tension to a larger section of the belt, in this case T2 shown in Figures 10(a and b), increases the level of slack built into the belt and thereby, increasing the risk of slip on one or more of the timing pulleys. This reduced stretching results in minimum slack in the timing belt, and thus reduces the possibility of slippage of the timing belt on the first pulley 255. In other words, the first section T1 of the timing belt between the drive pulley 253 and the first pulley 255 experiences a greater pull as the timing belt 254 is drawn towards the drive pulley 253 to cause a strain on the first section of the timing belt as a result of the single motor raising the container gripping assembly. Since the length of this section of the timing belt is smaller, any stretching in this section of the timing belt would be minimal to cause little or no belt slippage on the first timing pulley 255. Whilst not clearly shown in Figure 10a, redistribution of the tension in the timing belt by the belt tensioner wheel over a smaller section of the timing belt discussed above also applies to the second timing belt 264 on the third timing pulley 263. The problem with belt slippage is not as greater when lowering the container gripper assembly, due to an increased wrap angle of the timing belt around the second timing pulley 261 and/or the forces when lowering the container gripper assembly being largely gravitational. Moreover, as there is a greater wrap angle of the timing belt 254 on the second pulley 261, the risk of the timing belt 254 slipping on the second pulley 261 is greatly reduced.

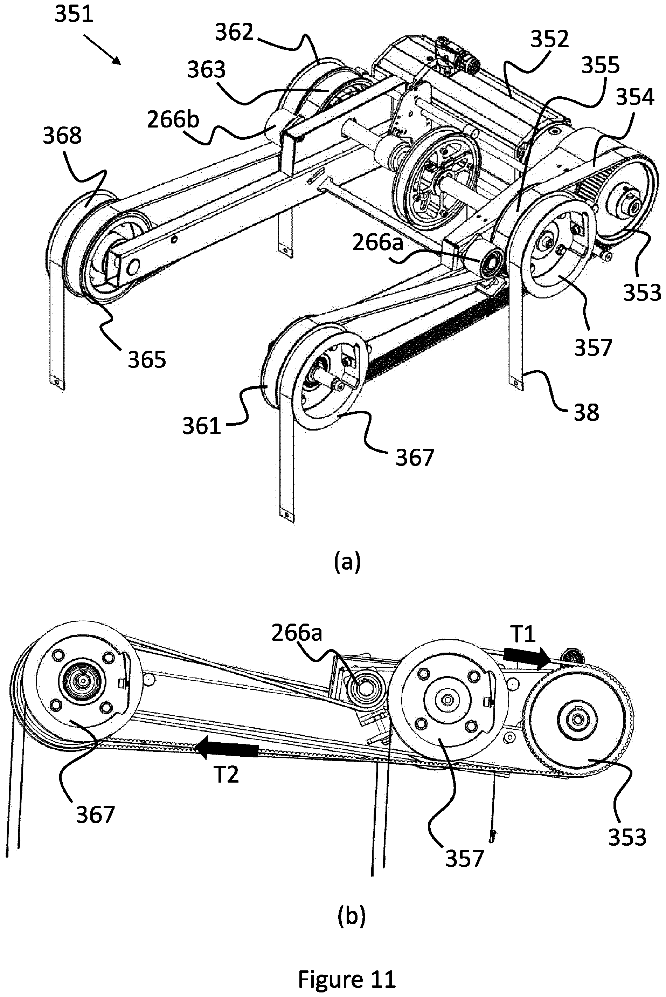

The present invention is not limited to the rotational direction being in an anti-clockwise direction when raising the container gripping assembly, and can apply when the rotational direction of the single motor is in a clockwise direction when lifting the container gripper assembly. In a second example of the container lifting mechanism 351 according to the present invention shown in Figure 11(a and b), rotation of the single motor 352 in a clockwise direction raises the container gripper assembly (not shown) and rotation in an anti-clockwise direction lowers the container gripper assembly. The common arrangement in both examples of the present invention is controlling the tension in a section of the timing belt that is drawn towards the drive pulley. As the rotational direction is in a clockwise direction when raising the container gripper assembly, the first section T1 of the timing belt 354 that experiences an increased tension in the timing belt when raising the container gripper assembly is at the upper side of the first pulley 355 as there is an initial pull of the timing belt towards the drive pulley 353 in this area. As a result, the belt tensioner wheel 366a is repositioned such that the timing belt 354 is urged against the upper side of the first timing pulley 355 such that the greatest tension in the timing belt is repositioned between the drive pulley 353 and the first timing pulley 355, i.e. the first section T1 of the timing belt. The second section T2 of the timing belt is between the first timing pulley 355 and the drive pulley 353 via the second pulley 361. The second section of the timing belt experiences the greatest tension when lowering the container gripper assembly, which is in an anti-clockwise rotation. The reduced tension in the second (longer) section T2 of the timing belt when raising the container gripping assembly, reduces any strain on the first (shorter) section of the timing belt. As the forces in the timing belt when lowering the container gripping assembly are largely due to gravitational forces, the tension in the second section of the timing belt is not sufficiently great so as to cause slippage of the belt on the second pulley. Moreover, since there is a greater wrap angle of the timing belt around the second pulley 361, the risk of slippage of the timing belt around the second pulley 361 is greatly reduced. The position of the belt tensioner wheel 266a is similar to the arrangement in the art as shown in Figure 9(a and b) but the rotational direction of the single motor is reversed when raising and lowering the container gripper assembly such that the first section of the timing belt is between the drive pulley 353 and the first pulley 355.

The diameters of the timing pulleys in the pulley system in both embodiments of the present shown in Figures 10(a and b) and 11(a and b) are the same as the timing pulleys shown in Figure 9(a and b) so that the changes in tension in the timing belt are all as a result of the different arrangements of the timing pulleys. The inventive concept in the present invention shown in Figures 10(a and b) and Figures 11(a and b) is the distribution of the timing belt tension towards a shorter segment of the timing belt that is drawn towards the drive pulley when lifting the container gripping assembly.

## Claims

1. A robotic load-handling device (30) for lifting and moving containers stacked in stacks in a grid framework structure, the grid framework structure including, above the stacks of containers, a first set of tracks (22) extending in a first direction and a second set of tracks (22) extending in a second direction which is transverse to the first direction, the robotic load-handling device (30) being configured to move on the tracks above the stacks, the robotic load-handling device (30) comprising:
a wheel assembly comprising a first set of wheels (34) for engaging with the first set of tracks to guide movement of the load-handling device in the first direction and a second set of wheels (36) for engaging with the second set of tracks to guide movement of the load-handling device in the second direction;
a wheel-positioning mechanism for selectively engaging either the first set of wheels with the first set of tracks or the second set of wheels with the second set of tracks, the wheel-positioning mechanism being configured to raise or lower the first set of wheels or the second set of wheels relative to the body, thereby enabling the load-handling device to selectively move in either the first direction or the second direction across the tracks of the grid framework structure; and
a container-lifting mechanism. comprising a container-gripping assembly (39) configured to releasably grip a container and a lifting drive assembly (151, 251, 351) configured to raise and lower the container-gripping assembly, wherein the lifting drive assembly comprises a single motor (252, 352) configured to raise the container-gripping assembly in a first rotational direction and lower the container-gripping assembly in a second rotational direction;
a first set of spools (257, 262, 357, 362) and a second set second of spools (267, 268, 367, 368), each spool of the first and second sets of spools carrying a lifting tether (38) having a first end anchored to the container gripping assembly and a second end anchored to its respective spool;
a drive pulley (253, 353) connected for rotation with the single motor (252, 352),
a plurality of timing pulleys connected for rotation with the first and second set of spools and the drive pulley such that the single motor is configured to rotate the first and second set of spools to raise and lower the container-gripping assembly;
wherein the plurality of timing pulleys comprises a first timing pulley (255, 355) and a second timing pulley (261, 361), the first and second timing pulleys are connected for rotation to the drive pulley by a single timing belt (254, 354) forming a closed loop around the first and second timing pulleys and the drive pulley such that the drive pulley drives rotation of the first and second timing pulleys in the same rotational direction; and
wherein the first timing pulley (255, 355) is disposed between the drive pulley (253, 353) and the second timing pulley (261, 361) and wherein the lifting drive assembly further comprises a belt tensioner wheel (266a, 266b, 366a, 366b) arranged between the first timing pulley and the second timing pulley,
**characterised in that** the belt tensioning wheel being arranged to urge the single timing belt against the first timing pulley (255, 355) such that the tension (T1) in a first section of the single timing belt between the first timing pulley (255, 355) and the drive pulley (253, 353), moving in a direction towards the drive pulley, in use, is greater than the tension (T2) in a second section of the single timing belt between the first timing pulley and the second timing pulley when the single motor rotates in the first rotational direction.

2. The robotic load handling device (30) of claim 1, wherein the length of the first section of the single timing belt is smaller than the length of the second section of the single timing belt.

3. The robotic load handling device (30) of claim 1 or 2, wherein the belt tensioning wheel (266a, 266b, 366a, 366b) is arranged to urge the single timing belt (254, 354) against the underside of the first timing pulley (255, 355) when the first rotational direction is in an anti-clockwise direction and the second rotational direction is in a clockwise direction.

4. The robotic load handling device (30) of claim 1 or 2, wherein the belt tensioning wheel (266a, 266b, 366a, 366b) is arranged to urge the single timing belt (254, 354) against the upper side of the first timing pulley (255, 355) when the first rotational direction is in a clockwise direction and the second rotational direction is in an anti-clockwise direction.

5. The robotic load handling device (30) of any of the preceding claims, wherein the first timing pulley (255, 355) and the first set of spools (257, 262, 357, 362) are mounted for rotation on a lifting shaft (170) such that the lifting shaft is common to the first set of spools and the first timing pulley.

6. The robotic load handling device (30) of claim 5, wherein at least one of the second set of spools (267, 268, 367, 368) is driven by the single motor (252, 352) by being connected to the shaft by a second timing belt (264).

7. The robotic load handling device (30) of claim 6, wherein the lifting drive assembly further comprises a third timing pulley (263, 363) mounted for rotation on the lifting shaft and a fourth timing pulley (265, 365) connected for rotation to the at least one of the second set of spools (267, 268, 367, 368), the second timing belt (264, 364) forming a closed loop around the third timing pulley and fourth timing pulley such that lifting shaft drives rotation of the at least one of the second set of spools (267, 268, 367, 368).

8. The robotic load handling device (30) of claim 7, wherein the lifting drive assembly further comprises a second belt tensioner wheel (266b, 366b) being arranged to urge the second belt against the third timing pulley.

9. The robotic load handling device (30) of claim 5, wherein the lifting drive assembly further comprises a second lifting shaft, the lifting shaft defining a first lifting shaft, the second lifting shaft being substantially parallel to the first lifting shaft, and wherein the second set of spools (267, 268, 367, 368) and the second timing pulley (261, 361) are mounted for rotation on the second lifting shaft, the second lifting shaft being rotated by the single motor by being connected to the first lifting shaft by the single timing belt.

10. The robotic load handling device (30) of any of the preceding claims, wherein the belt tensioner wheel is adjustable so as to adjust the force of the single timing belt against the first timing pulley (255, 355).

11. The robotic load handling device (30) of any of the preceding claims, wherein the container lifting mechanism comprises a communications spool carrying a communication cable for sending and/or receiving communication signals to and from the container gripping assembly, the communication cable having a first end connected to the communication spool and a second end connected to the container-gripping assembly, the communication spool being mounted for rotation on the lifting shaft such that single motor is configured to raise and lower the second end of the communication cable with the container gripping assembly.

12. The robotic load handling device (30) of any of the preceding claims, further comprising a vehicle body having an upper portion and a lower portion, the upper portion being configured to house one or more operation components, the lower portion being arranged beneath the upper portion, the lower portion comprising a container-receiving space for accommodating at least part of a container.

13. The robotic load handling device (30) of any of the preceding claims, wherein the single motor drives the first set of spools and the second set of spools in synchronization.

14. The robotic load handling device (300 of any of the preceding claims, wherein the container-gripping assembly comprises a frame structure.

15. A storage and retrieval system comprising:
a grid framework structure (14) comprising:
a track system (15) comprising a first set of parallel tracks and a second set of parallel tracks arranged in a grid pattern comprising a plurality of grid spaces or grid cells;
a plurality of stacks of containers located beneath the track system, wherein each of the stacks of containers occupies a single grid space or grid cell,
a load handling device as claimed in any of the claims 1 to 14 arranged to traverse along
the track system over the plurality of grid spaces or grid cells such that when positioned above a stack of containers occupying a grid space or grid cell, the container-lifting mechanism is configured to lift at least one container from said stack of containers.

## Patentansprüche

1. Robotische Lasthandhabungsvorrichtung (30) zum Anheben und Bewegen von Behältern, die in Stapeln in einer Gitterrahmenstruktur gestapelt sind, wobei die Gitterrahmenstruktur über den Stapeln von Behältern einen ersten Satz von Schienen (22), die sich in einer ersten Richtung erstrecken, und einen zweiten Satz von Schienen (22), die sich in einer zweiten Richtung erstrecken, die quer zur ersten Richtung verläuft, umfasst, wobei die robotische Lasthandhabungsvorrichtung (30) konfiguriert ist, um sich auf den Schienen über den Stapeln zu bewegen, wobei die robotische Lasthandhabungsvorrichtung (30) Folgendes umfasst:
eine Radanordnung, die einen ersten Satz von Rädern (34) zum Eingriff in den ersten Satz von Schienen, um die Bewegung der Lasthandhabungsvorrichtung in der ersten Richtung zu führen, und einen zweiten Satz von Rädern (36) zum Eingriff in den zweiten Satz von Schienen, um die Bewegung der Lasthandhabungsvorrichtung in der zweiten Richtung zu führen, umfasst;
einen Radpositionierungsmechanismus zum selektiven Eingriff entweder des ersten Satzes von Rädern in den ersten Satz von Schienen oder des zweiten Satzes von Rädern in den zweiten Satz von Schienen, wobei der Radpositionierungsmechanismus konfiguriert ist, um den ersten Satz von Rädern oder den zweiten Satz von Rädern relativ zum Körper anzuheben oder abzusenken, wodurch ermöglicht wird, dass sich die Lasthandhabungsvorrichtung selektiv entweder in der ersten Richtung oder der zweiten Richtung über die Schienen der Gitterrahmenstruktur bewegt; und
einen Behälterhebemechanismus, der eine Behältergreifanordnung (39), die konfiguriert ist, um einen Behälter lösbar zu greifen, und eine Hebeantriebsanordnung (151, 251, 351), die konfiguriert ist, um die Behältergreifanordnung anzuheben und abzusenken, umfasst,
wobei die Hebeantriebsanordnung einen einzelnen Motor (252, 352) umfasst, der konfiguriert ist, um die Behältergreifanordnung in einer ersten Drehrichtung anzuheben und die Behältergreifanordnung in einer zweiten Drehrichtung abzusenken;
einen ersten Satz von Spulen (257, 262, 357, 362) und einen zweiten Satz von Spulen (267, 268, 367, 368), wobei jede Spule des ersten und des zweiten Satzes von Spulen ein Hebeseil (38) trägt, das ein erstes Ende, das an der Behältergreifanordnung verankert ist, und ein zweites Ende, das an seiner jeweiligen Spule verankert ist, aufweist;
eine Antriebsriemenscheibe (253, 353), die zur Drehung mit dem einzelnen Motor (252, 352) verbunden ist,
eine Vielzahl von Steuerriemenscheiben, die zur Drehung mit dem ersten und dem zweiten Satz von Spulen und der Antriebsriemenscheibe verbunden sind, sodass der einzelne Motor konfiguriert ist, um den ersten und den zweiten Satz von Spulen zu drehen, um die Behältergreifanordnung anzuheben und abzusenken;
wobei die Vielzahl von Steuerriemenscheiben eine erste Steuerriemenscheibe (255, 355) und eine zweite Steuerriemenscheibe (261, 361) umfasst, wobei die erste und die zweite Steuerriemenscheibe zur Drehung mit der Antriebsriemenscheibe durch einen einzelnen Steuerriemen (254, 354) verbunden sind, der eine geschlossene Schleife um die erste und die zweite Steuerriemenscheibe und die Antriebsriemenscheibe bildet, sodass die Antriebsriemenscheibe die Drehung der ersten und der zweiten Steuerriemenscheibe in der gleichen Drehrichtung antreibt;
und
wobei die erste Steuerriemenscheibe (255, 355) zwischen der Antriebsriemenscheibe (253, 353) und der zweiten Steuerriemenscheibe (261, 361) angeordnet ist und wobei die Hebeantriebsanordnung ferner ein Riemenspannrad (266a, 266b, 366a, 366b) umfasst, das zwischen der ersten Steuerriemenscheibe und der zweiten Steuerriemenscheibe angeordnet ist,
**dadurch gekennzeichnet, dass** das Riemenspannrad angeordnet ist, um den einzelnen Steuerriemen gegen die erste Steuerriemenscheibe (255, 355) zu drücken, sodass die Spannung (T1) in einem ersten Abschnitt des einzelnen Steuerriemens zwischen der ersten Steuerriemenscheibe (255, 355) und der Antriebsriemenscheibe (253, 353), die sich in einer Richtung zur Antriebsriemenscheibe bewegt, im Gebrauch größer ist als die Spannung (T2) in einem zweiten Abschnitt des einzelnen Steuerriemens zwischen der ersten Steuerriemenscheibe und der zweiten Steuerriemenscheibe, wenn sich der einzelne Motor in der ersten Drehrichtung dreht.

2. Robotische Lasthandhabungsvorrichtung (30) nach Anspruch 1, wobei die Länge des ersten Abschnitts des einzelnen Steuerriemens kleiner ist als die Länge des zweiten Abschnitts des einzelnen Steuerriemens.

3. Robotische Lasthandhabungsvorrichtung (30) nach einem der Ansprüche 1 oder 2, wobei das Riemenspannrad (266a, 266b, 366a, 366b) angeordnet ist, um den einzelnen Steuerriemen (254, 354) gegen die Unterseite der ersten Steuerriemenscheibe (255, 355) zu drücken, wenn die erste Drehrichtung im Gegenuhrzeigersinn ist und die zweite Drehrichtung im Uhrzeigersinn ist.

4. Robotische Lasthandhabungsvorrichtung (30) nach einem der Ansprüche 1 oder 2, wobei das Riemenspannrad (266a, 266b, 366a, 366b) angeordnet ist, um den einzelnen Steuerriemen (254, 354) gegen die Oberseite der ersten Steuerriemenscheibe (255, 355) zu drücken, wenn die erste Drehrichtung im Uhrzeigersinn ist und die zweite Drehrichtung im Gegenuhrzeigersinn ist.

5. Robotische Lasthandhabungsvorrichtung (30) nach einem der vorhergehenden Ansprüche, wobei die erste Steuerriemenscheibe (255, 355) und der erste Satz von Spulen (257, 262, 357, 362) zur Drehung auf einer Hebewelle (170) montiert sind, sodass die Hebewelle dem ersten Satz von Spulen und der ersten Steuerriemenscheibe gemeinsam ist.

6. Robotische Lasthandhabungsvorrichtung (30) nach Anspruch 5, wobei mindestens eine des zweiten Satzes von Spulen (267, 268, 367, 368) durch den einzelnen Motor (252, 352) angetrieben wird, indem sie durch einen zweiten Steuerriemen (264) mit der Welle verbunden ist.

7. Robotische Lasthandhabungsvorrichtung (30) nach Anspruch 6, wobei die Hebeantriebsanordnung ferner eine dritte Steuerriemenscheibe (263, 363), die zur Drehung auf der Hebewelle montiert ist, und eine vierte Steuerriemenscheibe (265, 365), die zur Drehung mit der mindestens einen des zweiten Satzes von Spulen (267, 268, 367, 368) verbunden ist, umfasst, wobei der zweite Steuerriemen (264, 364) eine geschlossene Schleife um die dritte Steuerriemenscheibe und die vierte Steuerriemenscheibe bildet, sodass die Hebewelle die Drehung der mindestens einen des zweiten Satzes von Spulen (267, 268, 367, 368) antreibt.

8. Robotische Lasthandhabungsvorrichtung (30) nach Anspruch 7, wobei die Hebeantriebsanordnung ferner ein zweites Riemenspannrad (266b, 366b) umfasst, das angeordnet ist, um den zweiten Riemen gegen die dritte Steuerriemenscheibe zu drücken.

9. Robotische Lasthandhabungsvorrichtung (30) nach Anspruch 5, wobei die Hebeantriebsanordnung ferner eine zweite Hebewelle umfasst, wobei die Hebewelle eine erste Hebewelle definiert, wobei die zweite Hebewelle im Wesentlichen parallel zur ersten Hebewelle ist, und wobei der zweite Satz von Spulen (267, 268, 367, 368) und die zweite Steuerriemenscheibe (261, 361) zur Drehung auf der zweiten Hebewelle montiert sind, wobei die zweite Hebewelle durch den einzelnen Motor gedreht wird, indem sie durch den einzelnen Steuerriemen mit der ersten Hebewelle verbunden ist.

10. Robotische Lasthandhabungsvorrichtung (30) nach einem der vorhergehenden Ansprüche, wobei das Riemenspannrad einstellbar ist, um die Kraft des einzelnen Steuerriemens gegen die erste Steuerriemenscheibe (255, 355) einzustellen.

11. Robotische Lasthandhabungsvorrichtung (30) nach einem der vorhergehenden Ansprüche, wobei der Behälterhebemechanismus eine Kommunikationsspule umfasst, die ein Kommunikationskabel zum Senden und/oder Empfangen von Kommunikationssignalen an die und von der Behältergreifanordnung trägt, wobei das Kommunikationskabel ein erstes Ende, das mit der Kommunikationsspule verbunden ist, und ein zweites Ende, das mit der Behältergreifanordnung verbunden ist, aufweist, wobei die Kommunikationsspule zur Drehung auf der Hebewelle montiert ist, sodass der einzelne Motor konfiguriert ist, um das zweite Ende des Kommunikationskabels mit der Behältergreifanordnung anzuheben und abzusenken.

12. Robotische Lasthandhabungsvorrichtung (30) nach einem der vorhergehenden Ansprüche, ferner umfassend einen Fahrzeugkörper mit einem oberen Abschnitt und einem unteren Abschnitt, wobei der obere Abschnitt konfiguriert ist, um eine oder mehrere Betriebskomponenten aufzunehmen, wobei der untere Abschnitt unter dem oberen Abschnitt angeordnet ist, wobei der untere Abschnitt einen Behälteraufnahmeraum zum Aufnehmen mindestens eines Teils eines Behälters umfasst.

13. Robotische Lasthandhabungsvorrichtung (30) nach einem der vorhergehenden Ansprüche, wobei der einzelne Motor den ersten Satz von Spulen und den zweiten Satz von Spulen synchron antreibt.

14. Robotische Lasthandhabungsvorrichtung (30) nach einem der vorhergehenden Ansprüche, wobei die Behältergreifanordnung eine Rahmenstruktur umfasst.

15. Lager- und Rückholsystem, umfassend:
eine Gitterrahmenstruktur (14), umfassend:
ein Schienensystem (15), das einen ersten Satz von parallelen Schienen und einen zweiten Satz von parallelen Schienen umfasst, die in einem Gittermuster angeordnet sind, das eine Vielzahl von Gitterräumen oder Gitterzellen umfasst;
eine Vielzahl von Stapeln von Behältern, die sich unter dem Schienensystem befinden, wobei jeder der Stapel von Behältern einen einzelnen Gitterraum oder eine einzelne Gitterzelle einnimmt,
eine Lasthandhabungsvorrichtung nach einem der Ansprüche 1 bis 14, die angeordnet ist, um entlang des Schienensystems über die Vielzahl von Gitterräumen oder Gitterzellen zu verlaufen, sodass, wenn sie über einem Stapel von Behältern positioniert ist, der einen Gitterraum oder eine Gitterzelle einnimmt, der Behälterhebemechanismus konfiguriert ist, um mindestens einen Behälter von dem Stapel von Behältern anzuheben.

## Revendications

1. Dispositif de manipulation de charge robotique (30) pour lever et déplacer des contenants empilés en piles dans une structure d'ossature de grille, la structure d'ossature de grille incluant, au-dessus des piles de contenants, un premier ensemble de pistes (22) s'étendant dans une première direction et un second ensemble de pistes (22) s'étendant dans une seconde direction qui est transversale à la première direction, le dispositif de manipulation de charge robotique (30) étant configuré pour se déplacer sur les pistes au-dessus des piles, le dispositif de manipulation de charge robotique (30) comprenant :
un agencement de roues comprenant un premier ensemble de roues (34) destiné à venir en prise avec le premier ensemble de pistes afin de guider un déplacement du dispositif de manipulation de charge dans la première direction, et un second ensemble de roues (36) destiné à venir en prise avec le second ensemble de pistes afin de guider un déplacement du dispositif de manipulation de charge dans la seconde direction ;
un mécanisme de positionnement de roues pour mettre en prise sélectivement soit le premier ensemble de roues avec le premier ensemble de pistes, soit le second ensemble de roues avec le second ensemble de pistes, le mécanisme de positionnement de roues étant configuré pour lever ou abaisser le premier ensemble de roues ou le second ensemble de roues par rapport au corps, en permettant ainsi au dispositif de manipulation de charge de se déplacer sélectivement dans la première direction ou dans la seconde direction à travers les pistes de la structure d'ossature de grille ; et
un mécanisme de levage de contenant comprenant un agencement de préhension de contenant (39) configuré pour saisir de manière libérable un contenant et un agencement d'entraînement de levage (151, 251, 351) configuré pour lever et abaisser l'agencement de préhension de contenant,
dans lequel l'agencement d'entraînement de levage comprend un moteur unique (252, 352) configuré pour lever l'agencement de préhension de contenant dans une première direction de rotation et abaisser l'agencement de préhension de contenant dans une seconde direction de rotation ;
un premier ensemble de bobines (257, 262, 357, 362) et un second ensemble de bobines (267, 268, 367, 368), chaque bobine des premier et second ensembles de bobines portant une attache de levage (38) présentant une première extrémité ancrée à l'agencement de préhension de contenant et une seconde extrémité ancrée à sa bobine respective ;
une poulie d'entraînement (253, 353) connectée en rotation au moteur unique (252, 352),
une pluralité de poulies de synchronisation connectées pour une rotation avec les premier et second ensembles de bobines et la poulie d'entraînement de telle sorte que le moteur unique soit configuré pour faire tourner les premier et second ensembles de bobines afin de lever et d'abaisser l'agencement de préhension de contenant ;
dans lequel la pluralité de poulies de synchronisation comprend une première poulie de synchronisation (255, 355) et une deuxième poulie de synchronisation (261, 361), les première et deuxième poulies de synchronisation sont connectées pour une rotation de la poulie d'entraînement par l'intermédiaire d'une courroie de synchronisation unique (254, 354) formant une boucle fermée autour des première et deuxième poulies de synchronisation et de la poulie d'entraînement de telle sorte que la poulie d'entraînement entraîne une rotation des première et deuxième poulies de synchronisation dans la même direction de rotation ; et
dans lequel la première poulie de synchronisation (255, 355) est disposée entre la poulie d'entraînement (253, 353) et la deuxième poulie de synchronisation (261, 361), et dans lequel l'agencement d'entraînement de levage comprend en outre une roue de mise en tension de courroie (266a, 266b, 366a, 366b) agencée entre la première poulie de synchronisation et la deuxième poulie de synchronisation,
**caractérisé en ce que** la roue de mise en tension de courroie est agencée pour solliciter la courroie de synchronisation unique contre la première poulie de synchronisation (255, 355) de telle sorte que la tension (T1) dans une première section de la courroie de synchronisation unique entre la première poulie de synchronisation (255, 355) et la poulie d'entraînement (253, 353), se déplaçant dans une direction vers la poulie d'entraînement, en utilisation, soit supérieure à la tension (T2) dans une seconde section de la courroie de synchronisation unique entre la première poulie de synchronisation et la deuxième poulie de synchronisation lorsque le moteur unique tourne dans la première direction de rotation.

2. Dispositif de manipulation de charge robotique (30) selon la revendication 1, dans lequel la longueur de la première section de la courroie de synchronisation unique est inférieure à la longueur de la seconde section de la courroie de synchronisation unique.

3. Dispositif de manipulation de charge robotique (30) selon la revendication 1 ou 2, dans lequel la roue de mise en tension de courroie (266a, 266b, 366a, 366b) est agencée pour solliciter la courroie de synchronisation unique (254, 354) contre le côté inférieur de la première poulie de synchronisation (255, 355) lorsque la première direction de rotation est dans un sens inverse des aiguilles d'une montre et la seconde direction de rotation est dans un sens des aiguilles d'une montre.

4. Dispositif de manipulation de charge robotique (30) selon la revendication 1 ou 2, dans lequel la roue de mise en tension de courroie (266a, 266b, 366a, 366b) est agencée pour solliciter la courroie de synchronisation unique (254, 354) contre le côté supérieur de la première poulie de synchronisation (255, 355) lorsque la première direction de rotation est dans le sens des aiguilles d'une montre et la seconde direction de rotation est dans le sens inverse des aiguilles d'une montre.

5. Dispositif de manipulation de charge robotique (30) selon l'une quelconque des revendications précédentes, dans lequel la première poulie de synchronisation (255, 355) et le premier ensemble de bobines (257, 262, 357, 362) sont montés pour une rotation sur un arbre de levage (170) de telle sorte que l'arbre de levage soit commun au premier ensemble de bobines et à la première poulie de synchronisation.

6. Dispositif de manipulation de charge robotique (30) selon la revendication 5, dans lequel au moins une certaine du second ensemble de bobines (267, 268, 367, 368) est entraînée par le moteur unique (252, 352) en étant connectée à l'arbre par une deuxième courroie de synchronisation (264).

7. Dispositif de manipulation de charge robotique (30) selon la revendication 6, dans lequel l'agencement d'entraînement de levage comprend en outre une troisième poulie de synchronisation (263, 363) montée pour une rotation sur l'arbre de levage et une quatrième poulie de synchronisation (265, 365) connectée pour une rotation à la au moins une certaine du second ensemble de bobines (267, 268, 367, 368), la deuxième courroie de synchronisation (264, 364) formant une boucle fermée autour de la troisième poulie de synchronisation et de la quatrième poulie de synchronisation de telle sorte que l'arbre de levage entraîne une rotation de la au moins une certaine du second ensemble de bobines (267, 268, 367, 368).

8. Dispositif de manipulation de charge robotique (30) selon la revendication 7, dans lequel l'agencement d'entraînement de levage comprend en outre une seconde roue de mise en tension de courroie (266b, 366b) agencée pour solliciter la seconde courroie contre la troisième poulie de synchronisation.

9. Dispositif de manipulation de charge robotique (30) selon la revendication 5, dans lequel l'agencement d'entraînement de levage comprend en outre un second arbre de levage, l'arbre de levage définissant un premier arbre de levage, le second arbre de levage étant sensiblement parallèle au premier arbre de levage, et dans lequel le second ensemble de bobines (267, 268, 367, 368) et la seconde poulie de synchronisation (261, 361) sont montés pour une rotation sur le second arbre de levage, le second arbre de levage étant mis en rotation par l'intermédiaire du moteur unique en étant connecté au premier arbre de levage par l'intermédiaire de la courroie de synchronisation unique.

10. Dispositif de manipulation de charge robotique (30) selon l'une quelconque des revendications précédentes, dans lequel la roue de mise en tension de courroie est ajustable de manière à ajuster la force de la courroie de synchronisation unique contre la première poulie de synchronisation (255, 355).

11. Dispositif de manipulation de charge robotique (30) selon l'une quelconque des revendications précédentes, dans lequel le mécanisme de levage de contenant comprend une bobine de communication portant un câble de communication pour envoyer et/ou recevoir des signaux de communication vers et depuis l'agencement de préhension de contenant, le câble de communication présentant une première extrémité connectée à la bobine de communication et une seconde extrémité connectée à l'agencement de préhension de contenant, la bobine de communication étant montée pour une rotation sur l'arbre de levage de telle sorte qu'un moteur unique soit configuré pour lever et abaisser la seconde extrémité du câble de communication à l'aide de l'agencement de préhension de contenant.

12. Dispositif de manipulation de charge robotique (30) selon l'une quelconque des revendications précédentes, comprenant en outre un corps de véhicule présentant une partie supérieure et une partie inférieure, la partie supérieure étant configurée pour loger un ou plusieurs composants de fonctionnement, la partie inférieure étant agencée sous la partie supérieure, la partie inférieure comprenant un espace de réception de contenant pour recevoir au moins une partie d'un contenant.

13. Dispositif de manipulation de charge robotique (30) selon l'une quelconque des revendications précédentes, dans lequel le moteur unique entraîne le premier ensemble de bobines et le second ensemble de bobines en synchronisation.

14. Dispositif de manipulation de charge robotique (30) selon l'une quelconque des revendications précédentes, dans lequel l'agencement de préhension de contenant comprend une structure de cadre.

15. Système de stockage et de récupération, comprenant :
une structure d'ossature de grille (14), comprenant :
un système de pistes (15) comprenant un premier ensemble de pistes parallèles et un second ensemble de pistes parallèles agencées selon un motif de grille comprenant une pluralité d'espaces de grille ou de cellules de grille ;
une pluralité de piles de contenants situées sous le système de pistes, dans lequel chacune des piles de contenants occupe un espace de grille ou une cellule de grille unique ;
un dispositif de manipulation de charge tel que revendiqué selon l'une quelconque des revendications 1 à 14, agencé pour traverser le long du système de pistes au-dessus de la pluralité d'espaces de grille ou de cellules de grille de sorte que lorsqu'il est positionné au-dessus d'une pile de contenants occupant un espace de grille ou une cellule de grille, le mécanisme de levage de contenant soit configuré pour lever au moins un contenant à partir de ladite pile de contenants.
